# EUROPEAN PATENT APPLICATION

(11) **EP 4 357 998 A1**
(43) Date of publication of application: **24.04.2024**
(21) Application number: 22202552.0
(22) Date of filing: 19.10.2022
(51) Int. Cl.: G06Q 20/06, G06Q 20/36, G06Q 20/38, G06Q 20/12, G06Q 30/0601, H04L 9/00

(54) **METHOD FOR TOKEN TRANSACTION USING SMART CONTRACTS BASED ON BLOCKCHAIN TECHNOLOGY**

(71) Applicant: Kolibri GmbH, 65760 Eschborn (DE)
(72) Inventor:
(74) Representative: Dr. Langfinger & Partner

(57) **Abstract**

The present invention relates to a method for processing a digital transaction comprising:
receiving, by an issuer system in electronic communication with a smart contract, a transfer notification comprising a user's public blockchain address associated with the user's electronic wallet, a merchant's public blockchain address associated with the merchant's electronic wallet, and a transaction amount;
the issuer system in electronic communication with the smart contract receiving the x first token(s) corresponding to the transaction amount from the user's electronic wallet and sending the transaction amount in form of an amount of y second token(s) corresponding to the transaction amount to the merchant's electronic wallet.

## Description

The present invention relates to a method for token transactions using smart contracts based on blockchain technology.

A blockchain is a distributed and public ledger which maintains records of all the transactions. A blockchain network is a truly peer-to-peer network and it does not require a trusted central authority or intermediaries to authenticate or to settle the transactions or to control the network infrastructure.

Users can interact and transact with the blockchain networks through Externally Owned Account (EOAs), which are owned and controlled by the users. Such an EOA is as well as known as an "electronic wallet". Each electronic wallet or EOA has a balance (in certain units of a Cryptocurrency associated with the Blockchain network) associated with it. EOAs do not have any associated code. All transactions on a blockchain network are initiated by EOAs. These accounts can send transactions to other EOAs or contract accounts.

Another type of accounts support by second generation programmable Blockchain platforms are the Contract Accounts. A Contract Account is created and owned by an EOA and is controlled by the associated contract code which is stored with the account. Such contracts are as well known as "smart contracts". The contract code execution is triggered by transactions sent by EOAs or messages sent by other contracts.

Subsequently, the terms "smart contract" and "electronic wallets" are used for the above stated definitions subsequently to describe the scope of the present invention.

Blockchain networks can either be public or private. Public blockchain networks are free and open to all and any user can create an account and participate in the consensus mechanism on a public blockchain and view all the transactions on the network. Private blockchain networks are usually controlled and operated by a single organization and the transactions can be viewed only by the users within the organization.

Public blockchain networks are usually unpermissioned or permissionless, as any node can participate in consensus process. Some public blockchain networks adopt a permissioned model where the consensus process is controlled by a pre-selected set of nodes.

Private blockchain networks usually adopt the permissioned model. While public blockchain networks can be considered as fully decentralized, private blockchain networks are partially decentralized.

Organizations can have multiple private blockchain networks where each network is dedicated to a specific use case or department or business vertical. The blockchain networks within an organization may be created either using the same blockchain platform or technology or with different platforms or technologies.

On each blockchain network, a user can create multiple elecotrnic wallets. Each electronic wallet has a public-private keypair associated with it. The account address is derived from the public key. When a new electronic wallet is created, a keyfile is created which has the public and private keys associated with the account.

The private key is encrypted with the password which is provided while creating the account. For sending transactions to other accounts, the private key and the account password are required.

Based on blockchains, tokens can be created that looks and feel for the user as the native blockchain token, but is just a derviate of the actual block chain.

An example of such tokens are ERC20 tokens which are built on the Etherium Blockchain and ERC-721 token for non-fungible tokens (NFTs).

The present invention aims on a method of using tokens on an existing blockchain to allow payments between entities, in particular between users and merchants. Of course, it may be possible that a new blockchain may be created as a basis of the invention and this is not excluded from the present disclosure.

A payment refers to the liquidation of the bond/debt relationship between the parties to a transaction, which arises from various economic activities and financial transactions, through the transfer of monetary value. In the present case, in particular the transfer of a specific amount of money from a user in exchange for a good or service provided by a merchant.

A payment service is the movement of money between economic entities and financial institutions. Users, who are economic agents, use payment services provided by payment service providers such as banks and credit card companies that provide payment services in order to make payments to service providers that provide services.

However, payment services provided by payment service providers such as banks and credit card companies include online authentication companies, payment agencies (PG companies; payment gateway companies), and VAN companies that perform various auxiliary services between service providers and payment service providers.

This is a complex, not always user friendly, and expensive process.

In addition, in the conventional card payment network, since the user's personal information and card information for payment approval are transmitted on/offline, there is a problem in that information exposure by hacking or the like and card theft using the same may occur.

Accordingly, in the present invention, it is intended to provide a payment system that can be used for payment without using an existing credit or debit card payment network.

This problems stated above are solved by a method for processing a digital transaction comprising:
receiving, by an issuer system in electronic communication with a smart contract, a transfer notification comprising a user's public blockchain address associated with the user's electronic wallet, a merchant's public blockchain address associated with the merchant's electronic wallet, and a transaction amount;
the issuer system in electronic communication with the smart contract receiving the x first token(s) corresponding to the transaction amount from the user's electronic wallet and sending the transaction amount in form of an amount of y second token(s) corresponding to the transaction amount to the merchant's electronic wallet.

The surprising finding of the present invention is that it is possible to split one blockchain token transaction into two parts of token transfers of two different tokens with the help of a smart contract.

Blockchain payments have one big disadvantage: Most crypto currencies have no fixed values against fiat money like Euro or US-Dollar. This is desired for speculative investments by investors, but of disadvantage when it comes to actual payments.

The merchant don't want to change prices on a minutely basis in cryptocurrencies and the user intends to compare the pricing of goods and services to the value in fiat money.

Even though a fast and easy payment with crypto currency with all advantages of the same like e.g. transaction time and costs would be possible, due to the disadvantages state above there are hardly any payment options provided so far by merchants in crypto currencies.

The general scope of the present invention is therefore to allow a merchant to get paid in a stable value token, while the user may pay in a more volatile token, while a smart contract balances the tokens and proceeds the payments automatically. The term merchant shall be understood broadly in the present disclosure and shall comprise any receivers of payment transactions.

Therefore, an issuer system in electronic communication with a smart contract is provided. Said issuer system comprise an own smart wallet in connection with the smart contract. Once the user wants to start a transfer, a transfer notification comprising a user's public blockchain address associated with the user's electronic wallet, a merchant's public blockchain address associated with the merchant's electronic wallet, and a transaction amount is processed by the issuer system.

This information is the basis for the handling of payments on a blockchain. The issuer system must now how is paying whom which amount of money.

According to the present disclosure, the issuer system receives x first token(s) corresponding to the transaction amount. This may be a volatile token. After receiving the respective amount of first token(s), the issure system is sending a corresponding amount of second token(s) to the merchants electronic wallet. Preferably, said second token is much less volatile than the first token.

Within the method of the present invention it may be preferred that thehe issuer system gets permission to execute transaction from and to the user's and merchant's electronic wallet.

To interact with smart contracts, each electronic wallet can give permissions to smart contracts for transactions. This may be the right to transfer a certain number of tokens from the respective electronic wallet to another electronic wallet, either without limitation or within given boundaries.

For being able to estimate the value of the first and the second token relative to each other or to another reference value, it may be of advantage that the issuer system in electronic communication with the smart contract retrieves the value of the first token in relation to the second token via the smart contract and/or from one or more centralized and/or decentralized exchange, wherein in particular said relation is an exchange rate of the first and second token.

To be able to process a payment, a method according to the present invention retrieves the value of the first and second token relative to each other either by the smart contract itself or pay comparing the same with the respective values of the tokens relative to a further token.

According to one embodiment of the present disclosure it may be preferred that the second token is a token coupled in a specific range to a fiat money currency, in particular to a range >1% deviation of the fiat money currency in 99.9% of time.

For a merchant it is of advantage that the value in fiat money the receiving number of tokens is predictable. Therefore, it may be preferred that the second token is a so called "stable coin", which is a token that is in a fixed price range to a fiat currency.

According to a further embodiment of the present disclosure, it may be preferred that the issuer system is comprising a database of authorized merchants and each authorized merchant a unique merchant identifier is assigned with the respective authorized merchant, wherein the unique merchant identifier is the public blockchain address of the merchant and/or a identifier representative for the merchant linked with said public blockchain address.

Thereby it can be of advantage, that the issuer system in electronic communication with the smart contract, once a transfer notification is received, checks whether a transaction is established between a user and an authorized merchant, and, if this is true, the issuer systems sends z % of the tokens received from the user back to the user's electronic wallet.

To offer a bonus system may be of advantage. The technical problem to be solved is how to make sure that the system works without any misuse. This problem is solved by offering paybacks to the user for transactions made with registered merchants.

As well, it may be preferred according to one embodiment of the present disclosure that the smart contract interacts with a smart contract wallet comprising an amount A of first tokens and an amount B of second tokens, wherein the smart contract wallet is capable of sending and receiving first and second tokens to other electronic wallets, in particular to user and merchant wallets.

As stated above, each smart contract is associated with an electronic wallet to be able to interact with the blockchain. It may be of advantage if this smart wallet - or a further smart wallet - is connected with the smart wallet to work as a liquidity pool provider.

It may the as well be preferred that the merchant's electronic wallet interacts with a further smart contract or a software program, wherein each time the merchant receives an amount of y of second tokens and/or at predefined dates and times and/or in specific time intervals, e.g. daily, weekly, monthly and/or once a certain threshold value is reached, the amount of second tokens stored in the merchants wallet is sold on a centralized and/or decentralized exchanged and it is requested to pay out the respective amount of fiat money received to the merchants bank account.

Thereby, it can be of advantage that the merchant is registered at a centralized and/or decentralized exchange having an established electronic transfer process to the merchant's bank account.

This allows a direct connection from the blockchain technology to the traditional backing system.

According to a further embodiment of the present disclosure, a mobile wallet application is provided on a mobile devices of the user which is connected with the user's wallet and is capable of receiving information from the user's wallet, wherein the user is able to confirm and deny transaction via this mobile wallet application, and wherein the mobile wallet app is connected with a financial service provider application, said financial service provider application is connected to a bank account, a debit card, a credit card and/or another electronic wallet of the user.

Thereby it may be preferred that if the transaction amount exceeds the amount of first tokens in the user's wallet, the financial service provider application charges the bank account, the debit card and/or the credit card of the user to buy the respective amount of first tokens needed for completing the transaction and forward said to the user's wallet or transfers the amount of first tokens needed from the user's further wallet.

To ease the use for the user it may be preferred that in case the user does not has the number of tokens needed to proceed with the transaction, the needed amount is bought automatically by the system.

According to one embodiment of the present disclosure, a shop software is provided on a server, the shop software being connected to the issuer system, wherein a token pay button for payment of the first token is comprised to let users pay directly witch first tokens while the merchant receive second tokens and/or a payment in fiat money to his bank account.

The easiest way to implement the innovative payment solution described above is to provide a pay button that activates all functions described above automatically.

The inventive method may therefore comprise the following steps, in particular in this order
a) a user selects the token pay button to pay for his purchase;
b) the issuer system issues and transfer notification comprising the user's public blockchain address associated with the user's electronic wallet, the merchants public blockchain address associated with the merchant's public wallet and the transaction amount;
c) transferring the x first token(s) corresponding to the transaction amount from the user's electronic wallet to the smart contract wallet and sending the transaction amount in form of an amount of y second token(s) corresponding to the transaction amount from the smart contract wallet to the merchant's electronic wallet.

In addition to the innovative method, the innovation provides as well a related computer-based system for processing transactions, in particular a method according to one of the preceding claims, comprising:
a processor; and a tangible, non-transitory memory configured to communicate with the processor, the tangible, non-transitory memory having instructions stored thereon that, in response to execution by the processor, cause an issuer system to perform operations comprising:
receiving, by an issuer system in electronic communication with a smart contract, a transfer notification comprising a user's public blockchain address associated with the user's electronic wallet, a merchant's public blockchain address associated with the merchant's electronic wallet, and a transaction amount;
the issuer system in electronic communication with the smart contract receiving the x first token(s) corresponding to the transaction amount from the user's electronic wallet and sending the transaction amount in form of an amount of y second token(s) corresponding to the transaction amount to the merchant's electronic wallet.

Preferably, said system further comprises a mobile device associate with a user capable of running a mobile wallet application.

The foregoing aspects and many of the attendant advantages of this invention will become more readily appreciated as the same become better understood by reference to the following detailed description, when taken in conjunction with the accompanying drawing, wherein:

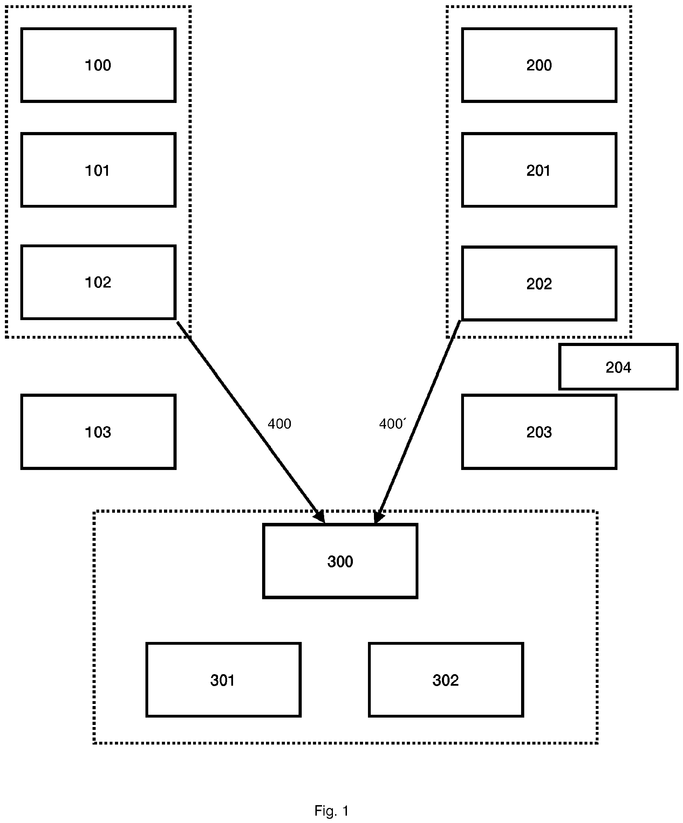

FIG. 1 is a schematic block diagram of an example of the method according to an embodiment.

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

While illustrative examples are illustrated and described below, it will be appreciated that various changes can be made therein without departing from the spirit and scope of the disclosure. In that regard, the detailed description set forth below, in connection with the appended drawings is intended only as a description of various examples of the disclosed subject matter and is not intended to represent the only examples. Each example described in this disclosure is provided merely as an example or illustration and should not be construed as preferred or advantageous over other examples. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

Figure 1 shows a diagram 100 illustrating an exemplarily example of the method according to the present disclosure.

For the method, according to this example, at least one smart contract connectable to at least one electronic wallet of a user and at least one electronic wallet is provided.

A user 100 is owner of a bank account 101 for storing fiat money and of an electronic wallet 102 for blockchain transaction. A merchant 200 owns a bank account 201 and as well an electronic wallet 202.

Furthermore, the user 100 owns a mobile device 103 and the merchant an online-shop 203.

The issuer system 300 is in electronic communication with a smart contract 301 and an electronic wallet 302 acting as a liquidity pool and serving as a basis for the smart contract 301.

In the first method step, the user's electronic wallet 102 starts a transaction 400 in case a respective "pay" button is selected by the user 100 in the onlineshop 203 of the merchant.

To start the interaction, the user's smart wallet 102 interacts with the issuer system 300, in particular with the smart contract 301 of the issuer system.

The issuer system 300 receives from the merchant the public blockchain address of its wallet 202 and the respective transaction amount 400' and the user's electronic wallet public blockchain address 400.

Subsquent, the smart contract 300 requests a token transaction from the user's electronic wallet 102 with the amount of first tokens needed for completing the transaction and stores them in the respective electronic wallet 302 and sends a number of second tokens from the electronic wallet 302 to the merchants electronic wallet 202.

In the next step, or prior to this step, the smart contract 300 checks whether the merchant is a listed merchant. If correct, the smart contracts causes the electronic wallet 302 to send a pre-defined percentage of first tokens back to the user's electronic wallet 102.

By the help of a separate software - or being part of the smart contract itself - the second tokens in the electronic wallet 202 are changed to fiat money at defined intervals, e.g. on a daily bases. This is executed by selling them on a centralized or dezentralized exchange for fiat money. The received fiat money is than transferred to the merchant's bank account 201 by the software automatically.

With the help of this innovative method, a payment solution is possible which allows a merchant to be paid in crypto tokens, while from a practical perspective the merchant receives fiat money on his bank account only directly.

In case that the user's wallet has an insufficient amount of first tokens stored, with the help of an application 103 installed on a user's mobile device which is connected to his electronic wallet 102 and has an interface with a decentralized or centralized exchange, the needed number of first tokens may be bought automatically to complete the transaction and charge the buying amount in fiat money to the user's bank account 101.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and method steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for processing a digital transaction comprising:
receiving, by an issuer system in electronic communication with a smart contract, a transfer notification comprising a user's public blockchain address associated with the user's electronic wallet, a merchant's
public blockchain address associated with the merchant's electronic wallet, and a transaction amount;
the issuer system in electronic communication with the smart contract receiving the x first token(s) corresponding to the transaction amount from the user's electronic wallet and sending the transaction amount in form of an amount of y second token(s) corresponding to the transaction amount to the merchant's electronic wallet.

2. A method according to claim 1, further comprising
the issuer system gets permission to execute transaction from and to the user's and merchant's electronic wallet.

3. the issuer system in electronic communication with the smart contract retrieves the value of the first token in relation to the second token via the smart contract and/or from one or more centralized and/or decentralized exchange, wherein in particular said relation is an exchange rate of the first and second token.

4. A method according to claim 1 or 2, further
the second token is a token coupled in a specific range to a fiat money currency, in particular to a range >1% deviation of the fiat money currency in 99.9% of time.

5. A method according to one of the preceding claims, further comprising the following step:
the issuer system comprising a database of authorized merchants and each authorized merchant a unique merchant identifier is assigned with the respective authorized merchant, wherein the unique merchant identifier is the public blockchain address of the merchant and/or a identifier representative for the merchant linked with said public blockchain address.

6. A method according to one of the preceding claims, wherein
the issuer systemin electronic communication with the smart contract, once a transfer notification is received, checks whether a transaction is established between a user and an authorized merchant, and, if this is true, the issuer systems sends z % of the tokens received from the user back to the user's electronic wallet.

7. A method according to one of the preceding claims, wherein
the smart contract interacts with a smart contract wallet comprising an amount A of first tokens and an amount B of second tokens, wherein the smart contract wallet is capable of sending and receiving first and second tokens to other electronic wallets, in particular to user and merchant wallets.

8. A method according to one of the preceding claims, wherein
the
the merchant's electronic wallet interacts with a further smart contract or a software program, wherein each time the merchant receives an amount of y of second tokens and/or at predefined dates and times and/or in specific time intervals, e.g. daily, weekly, monthly and/or once a certain threshold value is reached, the amount of second tokens stored in the merchants wallet is sold on a centralized and/or decentralized exchanged and it is requested to pay out the respective amount of fiat money received to the merchants bank account.

9. A method according to claim 7, wherein
the merchant is registered at a centralized and/or decentralized exchange having an established electronic transfer process to the merchants bank account.

10. A method according to one of the preceding claims, wherein
a mobile wallet application is provided on a mobile devices of the user which is connected with the user's wallet and is capable of receiving information from the user's wallet, wherein the user is able to confirm and deny transaction via this mobile wallet application, and wherein
the mobile wallet app is connected with a financial service provider application, said financial service provider application is connected to a bank account, a debit card, a credit card and/or another electronic wallet of the user.

11. The method according to claim 9, wherein
if the transaction amount exceeds the amount of first tokens in the user's wallet, the financial service provider application charges the bank account, the debit card and/or the credit card of the user to buy the respective amount of first tokens needed for completing the transaction and forward said to the user's wallet or transfers the amount of first tokens needed from the user's further wallet.

12. The method according to any of the preceding claims, wherein
a shop software is provided on a server, the shop software being connected to the issuer system, wherein a token pay button for payment of the first token is comprised to let users pay directly witch first tokens while the merchant receive second tokens and/or a payment in fiat money to his bank account.

13. The method according to any of the preceding claims, comprising the following steps, in particular in this order
a) a user selects the token pay button to pay for his purchase;
b) the issuer system issues and transfer notification comprising the user's public blockchain address associated with the user's electronic wallet, the merchants public blockchain address associated with the merchant's public wallet and the transaction amount;
c) transferring the x first token(s) corresponding to the transaction amount from the user's electronic wallet to the smart contract wallet and sending the transaction amount in form of an amount of y second token(s) corresponding to the transaction amount from the smart contract wallet to the merchant's electronic wallet.

14. A computer-based system for processing transactions, in particular a method according to one of the preceding claims, comprising:
a processor; and a tangible, non-transitory memory configured to communicate with the processor, the tangible, non-transitory memory having instructions stored thereon that, in response to execution by the processor,
cause an issuer system to perform operations comprising:
receiving, by an issuer system in electronic communication with a smart contract, a transfer notification comprising a user's public blockchain address associated with the user's electronic wallet, a merchant's
public blockchain address associated with the merchant's electronic wallet, and a transaction amount;
the issuer system in electronic communication with the smart contract receiving the x first token(s) corresponding to the transaction amount from the user's electronic wallet and sending the transaction amount in form of an amount of y second token(s) corresponding to the transaction amount to the merchant's electronic wallet.

15. The computer-based system according to claim 14, further comprising:
a mobile device associate with a user capable of running a mobile wallet application.
